# FASCICULE DE BREVET EUROPEEN

(11) **EP 4 533 051 B1**
(45) Date de publication et mention de la délivrance du brevet: **01.04.2026**
(21) Numéro de dépôt: 23724848.9
(22) Date de dépôt: 11.05.2023
(51) Int. Cl.: G01M 17/02, G01M 1/00, B60C 23/04, B60C 13/00

(54) **PROCÉDÉ ET SYSTÈME POUR ENREGISTRER LES COORDONNÉES D'UNE INDICATION VISUELLE DE L'UNIFORMITÉ D'UN PNEUMATIQUE IDENTIFIÉ ÉQUIPÉ DE PUCE RFID**
VERFAHREN UND SYSTEM ZUR ERFASSUNG DER KOORDINATEN EINER VISUELLEN ANZEIGE DER GLEICHFÖRMIGKEIT EINES IDENTIFIZIERTEN REIFENS MIT EINEM RFID-CHIP
METHOD AND SYSTEM FOR RECORDING THE COORDINATES OF A VISUAL INDICATION OF THE UNIFORMITY OF AN IDENTIFIED TYRE EQUIPPED WITH AN RFID CHIP

(30) Priorité: 24.05.2022 FR 2204958
(43) Date de publication de la demande: 09.04.2025
(73) Titulaire: COMPAGNIE GENERALE DES ETABLISSEMENTS MICHELIN, 63000 Clermont-Ferrand (FR)
(72) Inventeur: ROUGANNE, Sebastien, 63040 Clermont-Ferrand Cedex 09 (FR); DERVILLE, Alexandre, 63040 Clermont-Ferrand Cedex 09 (FR); SOURY, Jordan, 63040 Clermont-Ferrand Cedex 09 (FR); ROCHE, Kevin, 63040 Clermont-Ferrand Cedex 09 (FR)
(74) Mandataire: M.F.P. Michelin
(86) Numéro de dépôt international: PCT/EP2023/062549
(87) Numéro de publication internationale: WO 2023/227380

(56) Documents cités:
- DE-A1- 102018 209 032
- JP-A- H01 100 410
- US-A1- 2008 119 962
- US-B1- 6 417 918

## Description

### Domaine Technique

L'invention concerne un procédé mis en œuvre par un système pour enregistrer les coordonnées d'une indication visuelle de l'uniformité d'un pneumatique identifié équipé de puce RFID.

### Contexte

En considérant la géométrie des pneumatiques, il est bien entendu qu'un pneumatique parfaitement équilibré et parfaitement rond n'existe pas dans ce domaine. En raison de l'irrégularité du pneumatique, la force supplémentaire agissant sur l'arbre rotatif pendant le processus de roulement provoque des vibrations et une déviation du véhicule associé, ce qui affecte la vitesse, le confort ou la fluidité du fonctionnement du véhicule. Par conséquent, l'uniformité du pneumatique est très importante pour le véhicule. Ainsi, les fabricants de pneumatiques réalisent des tests de l'uniformité de chaque pneumatique pour assurer des performances en termes de direction, de traction, de freinage et de support de charge.

« L'uniformité » des pneumatiques fait référence à leurs propriétés mécaniques dynamiques comme défini par un ensemble de normes de mesure et de conditions d'essai acceptées par les fabricants mondiaux de pneumatiques et de véhicules. Ces normes comprennent les paramètres de variation de la force radiale, de variation de la force latérale, de variation de la force avant/arrière, de conicité, de direction des plis, de sortie radiale, de sortie latérale et de renflement des flancs. Les fabricants de pneumatiques utilisent la mesure de l'uniformité pour identifier les pneumatiques peu performants afin qu'ils ne soient pas vendus sur le marché.

Pour les pneumatiques performants qui sont vendus, les fabricants de pneumatiques s'assurent de marquer des incohérences d'uniformité par des indications visuelles, afin qu'elles puissent être corrigées pendant le processus de montage du pneumatique à la jante. De manière typique, le fabricant place spécifiquement des points colorisés sur les flancs des pneumatiques pour guider le processus de montage. Ces points colorisés ont pour but d'aider le technicien à équilibrer correctement le pneumatique. Par exemple, la force radiale doit être minimisée pour assurer une installation correcte et pour assurer une conduite souple. Par exemple, la force radiale est indiquée par un point blanc.

Les points colorisés sont entièrement gérés par les machines d'uniformité, ces dernières prenant une analyse de l'enveloppe pour extraire des informations d'uniformité. En utilisant un code à barres comme référence, les machines d'uniformité stockent l'information de la position de ces mesures et leurs valeurs. Ces machines appliquent également un point colorisé sur le flanc du pneumatique à la position de la mesure afin d'avoir un repère visuel. La référence est le point colorisé (et pas le code à barres) parce que le code à barres n'est pas visible lors de l'assemblage du pneumatique et de la jante. Malheureusement, ces points colorisés sont assez complexes à mettre en œuvre. Par exemple, ils peuvent se décoller et, en conséquence, génèrent une perte de temps et d'argent pour le producteur du pneumatiques et ses clients. Un tel procédé est décrit dans le document US6417918B1.

Dans le domaine de la fabrication de pneumatiques, il existe déjà des organes électroniques fixés à l'intérieur d'une enveloppe par moyen d'un dispositif de fixation (par exemple, un organe électronique de type TMS, ou « Tire-Mounted System » en anglais). Chaque dispositif de fixation est fabriqué à partir d'un matériau élastomère (par exemple, un caoutchouc naturel, un élastomère synthétique et des combinaisons et équivalents de ceux-ci) qui permet une performance de communication d'un organe électronique. L'organe électronique monté dans le dispositif de fixation mesure des paramètres à l'intérieur d'une cavité formée par l'enveloppe dans un état gonflé et une jante de roue à laquelle l'enveloppe est montée. Les paramètres mesurés sont choisis parmi des paramètres jugés essentiels à un usage sécuritaire de l'ensemble monté, qui comprennent, sans limitation, la pression des pneumatiques (y compris la variation de pression des pneumatiques), la température des pneumatiques (y compris la variation de température des pneumatiques), la vitesse des roues, l'accélération (y compris la variation d'accélération), la variation du sommet (y compris l'usure prévue du sommet) et des données connexes (par exemple, des données d'épreuves sur piste qui peuvent être capturées par chaque organe électronique). La communication avec ces organes électroniques (notamment pour la communication des paramètres de l'ensemble monté) se fait généralement par le biais d'une transmission radiofréquence vers des dispositifs émetteurs/récepteurs (par exemple, en utilisant les dispositifs du type « radio frequency identification », ou « RFID »). Un pneumatique actuellement équipé de puce RFID dispose d'un identifiant unique qui permet de retrouver les informations associées à ce pneumatique dans la chaine de traçabilité.

Ainsi, l'invention divulguée utilise l'identifiant RFID pour récupérer les informations d'uniformité afin de s'affranchir du point colorisé. L'invention met en œuvre donc une digitalisation du point colorisé afin d'optimiser le processus d'application d'indications visuelles de l'uniformité de pneumatiques.

### Résumé de l'invention

L'invention concerne un procédé mis en œuvre par un système pour enregistrer les coordonnées d'une indication visuelle de l'uniformité d'un pneumatique identifié équipé de puce RFID, caractérisé en ce que le procédé comprend les étapes suivantes :
- une étape de détection du pneumatique identifié, pendant laquelle un système d'imagerie du système obtient une ou des images numériques du pneumatique identifié, cette étape comprenant les étapes suivantes :
- la capture des placements d'une plaquette et d'un code à barres dans la ou les images du pneumatique identifié obtenues par le système d'imagerie ;
- l'analyse de la ou des images du pneumatique identifié obtenues par le système d'imagerie pour déterminer la taille du pneumatique identifié permettant d'identifier les localisations de la plaquette et du code à barres ;
- une étape de calcul d'un angle α₁ qui représente une distance angulaire entre la plaquette et le code à barres, de sorte que les coordonnées respectives de la plaquette et du code à barres sont utilisées pour calculer l'angle α₁ entre eux, pendant laquelle la mesure de l'angle α₁ est enregistrée dans une base de données du système ;
- une étape de détection de l'indication visuelle affichée au pneumatique identifié par son producteur, pendant laquelle l'indication visuelle est détectée dans une ou des images du pneumatique identifié obtenues par le système d'imagerie dont le placement de l'indication visuelle est capturée ;
- une étape de calcul d'un angle α₂ qui représente une distance angulaire entre le code à barres et l'indication visuelle, de sorte que les coordonnées respectives du code à barres et de l'indication visuelle sont utilisées pour calculer l'angle α₂ entre eux, pendant laquelle la mesure de l'angle α₂ est enregistrée dans la base de données du système ;
- une étape d'enregistrement de l'angle α₁ et de l'angle α₂ permettant d'obtenir leur somme pour déterminer un angle total α_{T} entre la plaquette et l'indication visuelle, pendant laquelle l'angle total α_{T} est enregistré dans la base de données du système comme l'information générale du pneumatique identifié ;

de sorte qu'une détermination du placement de la plaquette permet la localisation des coordonnées du point d'uniformité représentées par l'indication visuelle ; et
de sorte que l'information générale est incorporée dans la base de données, associée à l'identifiant de la puce RFID pour permettre l'accès aux coordonnées de l'information visuelle.

Dans un mode de réalisation du procédé de l'invention, le procédé comprend en outre une étape de comparaison des angles α₁, α₂ calculés pour le pneumatique identifié avec les paramètres de pneumatiques connus, cette étape étant réalisée par le processeur du système. Dans un mode de réalisation du procédé de l'invention, pendant l'étape de détection du pneumatique identifié, le système d'imagerie balaye pour déterminer les données correspondantes aux bords verticaux avants du pneumatique identifié de sorte qu'une ligne médiane du pneumatique identifié peut être identifiée.

Dans un mode de réalisation du procédé de l'invention, l'étape de détection du pneumatique identifié comprend en outre au moins une des étapes suivantes :
- une étape de détermination du diamètre du pneumatique identifié ;
- une étape de détermination du rayon du pneumatique du pneumatique identifié ;
- une étape de détermination du rayon de jante du pneumatique identifié ;
- une étape d'identification du point central du pneumatique identifié ; et
- une étape de détermination de l'emplacement des limites interne et externe du flanc du pneumatique identifié.

Dans un mode de réalisation du procédé de l'invention, le procédé comprend en outre une étape de comparaison des angles α₁, α₂ calculés pour le pneumatique identifié avec les paramètres de pneumatiques disponibles dans le commerce qui correspondent le plus étroitement aux paramètres de pneumatique identifié, cette étape étant réalisée par le processeur du système.

Dans un mode de réalisation du procédé de l'invention :
- la plaquette incorpore le numéro de semaine et d'année de fabrication du pneumatique identifié ; et
- le code à barres inclut toutes les informations relatives à la fabrication du pneumatique identifié qui permettent d'identifier sa source exacte ;
de sorte que ces informations font partie de l'information générale du pneumatique identifié. Dans un mode de réalisation du procédé de l'invention, le procédé est mis en œuvre par ordinateur pour que le système puisse construire un modèle de prévision de l'information d'uniformité correspondante au pneumatique identifié.

L'invention concerne aussi un système pour mettre en œuvre le procédé divulgué, caractérisé en ce que le système comprend :
- un réseau de communication qui gère les données entrantes au système des sources variées, le réseau de communication comprenant :
- au moins un serveur de communication avec au moins un processeur qui gère les données correspondant à l'information générale concernant un pneumatique identifié ; et
- un ou des dispositifs de communication qui capturent et transmettent les données obtenues au serveur, les dispositifs de communication comprenant un système d'imagerie qui capture des images d'un pneumatique identifié pour transmettre les données correspondantes aux images obtenues au serveur ;
- et une ou des bases de données dont des données incorporant l'information générale sont enregistrées pour construire un ou des profils de l'uniformité de pneumatiques ;
dans lequel le serveur comprend un module de traitement d'image qui analyse des images des pneumatiques obtenues par le système d'imagerie de sorte que l'information générale du pneumatique identifié comprenant des données correspondant au pneumatique identifié sont incorporées dans son identifiant RFID.

Dans un mode de réalisation du système de l'invention, le serveur est associé à un ou plusieurs producteurs de pneumatiques.

D'autres aspects de l'invention vont devenir évidents grâce à la description détaillée suivante.

### Brève description des dessins

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :
**[****Fig 1] [Fig 2****]** Les figures 1 et 2 représentent des constituants d'un pneumatique connu dans un plan méridien.
**[****Fig 3****]** La figure 3 représente un mode de réalisation d'un système de l'invention pour mettre en œuvre un procédé d'application d'indications visuelles de l'uniformité de pneumatiques.
**[****Fig 4****]** La figure 4 représente un pneumatique identifié traité par le système de la figure 3 pendant la réalisation d'un procédé de l'invention pour l'application d'indications visuelles de l'uniformité de pneumatiques.

### Description détaillée

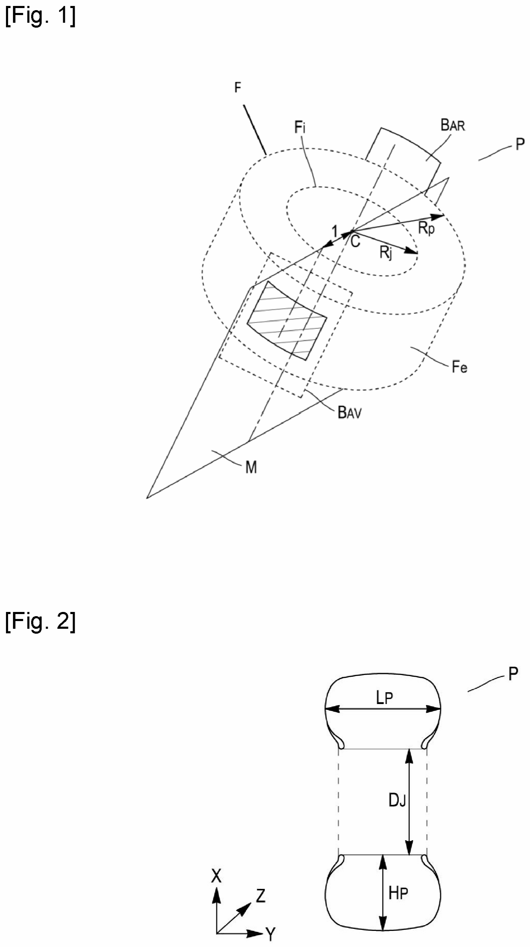

En considérant la géométrie des pneumatiques, les figures 1 et 2 sont des représentations schématiques d'un pneumatique P qui comprend, de façon classique, deux bourrelets circonférentiels destinés à permettre l'accrochage du pneumatique sur une jante. Chaque bourrelet comprend une tringle annulaire de renfort. En se référant particulièrement à la figure 1, le pneumatique P comprend une limite interne F₁ et une limite externe F_{E} qui définissent ensemble les limites d'un flanc F du pneumatique P. La limite interne F_{I} sépare le flanc F du pneumatique et une jante (non représentée) à laquelle le pneumatique est destiné pour montage. Le pneumatique P comprend aussi un rayon de jante R_{J} défini comme la distance entre un point central C du pneumatique et la limite interne F_{I} qui sépare la jante et le flanc F du pneumatique. Le pneumatique P comprend également un diamètre de flanc interne défini comme le double du rayon de jante R_{J}. Le pneumatique P comprend aussi un rayon de pneumatique R_{P} défini comme la distance entre le point central C et une limite externe F_{E} du flanc F qui représente la surface de roulement du pneumatique. Le pneumatique P comprend également un diamètre de pneumatique défini comme le double du rayon du pneumatique R_{P}. En se référant à la figure 2, un pneumatique P gonflé et sans charge comprend plusieurs paramètres de sa géométrie, y compris une largeur L_{P} de section nominale et une hauteur H_{P} (la hauteur H_{P} étant souvent exprimée en pourcentage de la largeur L_{P}). Le pneumatique P comprend aussi une mesure D_{J} qui représente le diamètre d'une jante à laquelle le pneumatique est destiné pour montage (cette mesure étant sensiblement égale au diamètre de flanc interne F_{I}). Il est entendu que chacun de ces paramètres peut être exprimés en mesures de longueur connues équivalentes (par exemple, en millimètres (mm) ou en pouces (in)).

La constitution d'un pneumatique est typiquement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique, et perpendiculaire à tout plan méridien. Les expressions « radialement », « axialement » et « circonférentiellement » signifient respectivement « selon une direction radiale », « selon une direction axiale » et « selon une direction circonférentielle » du pneumatique. Les expressions « radialement intérieur » et « respectivement radialement extérieur » signifient « plus proche, respectivement plus éloigné, de l'axe de rotation du pneumatique, selon une direction radiale ».

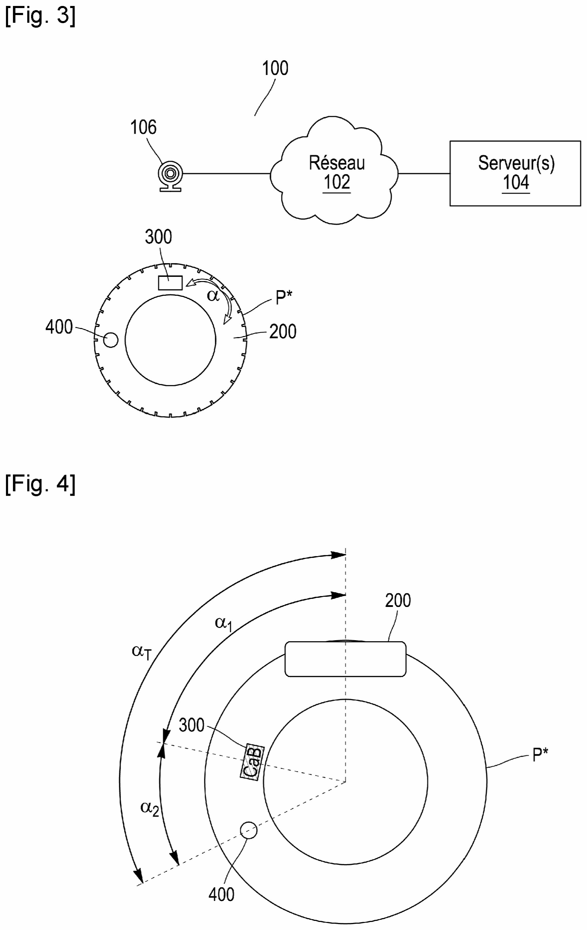

En se référant maintenant aux figures 3 et 4, sur lesquelles les mêmes numéros identifient des éléments identiques, la figure 3 représente un mode de réalisation d'un système 100 pour mettre en œuvre un procédé d'application d'indications visuelles de l'uniformité de pneumatiques. Comme utilisées ici, les indications visuelles font référence aux points colorisés (mais il est entendu que d'autres indications visuelles pourraient être traitées par le système 100). Le procédé de l'invention profite de l'identifiant RFID d'un pneumatique (par exemple, un pneumatique du type représenté dans la figure 2) pour récupérer ses informations d'uniformité. L'identifiant RFID fait référence aux données correspondantes à l'information générale d'un pneumatique identifié, ces données pouvant comprendre, sans limitation, sa taille (qui peut être représentée par le type de pneumatique et/ou sa nomenclature), son code de construction (par exemple, « R » pour radial »), sa provenance de production (par exemple, le nom et/ou la marque du producteur du pneumatique identifié, sa date de manufacture et son lieu de manufacture, distribution et/ou stockage), son numéro unique d'identification (ou « serial number »), son indice de charge (ou « load index »), son symbole de vitesse (par exemple, « A5 » qui représente 25 km/h), et/ou son kilométrage prévu. A titre d'exemple, pour un pneumatique d'une taille 250/70 R 15, le numéro « 250 » représente la largeur nominale de section du pneumatique en millimètres, le numéro « 70 » représente le rapport hauteur/larguer (ou « aspect ratio ») du pneumatique, la lettre « R » représente un pneumatique radial, et le numéro « 15 » représente le diamètre de la jante en pouces.

Il est entendu que l'identifiant RFID, en employant l'invention divulguée, peut comprendre l'information d'uniformité du pneumatique identifié.

En se référant encore à la figure 3, le système 100 comprend un réseau de communication (ou « réseau ») 102 qui gère les données entrantes au système 100 des sources variées. Le réseau de communication 102 incorpore au moins un serveur de communication (ou « serveur ») 104 avec au moins un processeur qui gère les données correspondant à l'information générale concernant un pneumatique identifié. Le terme « pneumatique identifié » (dans le singulier ou le pluriel) est utilisé ici pour faire référence à un pneumatique équipé de puce RFID qui est présent dans l'environnement physique du système 100 et qui est sujet aux tests de l'uniformité. Le serveur 104 peut comprendre (ou peut accéder à) une ou des bases de données du système 100 dont des données incorporant l'information générale sont enregistrées pour construire un ou des profils de l'uniformité de pneumatiques. Le serveur 104 peut être associé à un ou plusieurs producteurs de pneumatiques.

Le réseau de communication 102 du système 100 peut comprendre un ou des dispositifs de communication (ou « dispositifs ») qui capturent et transmettent les données obtenues au serveur 104. Le ou les dispositifs de communication peuvent comprendre un ou des dispositifs portables tels qu'un ou des dispositifs de réseau mobile (par exemple, un ou des téléphones mobiles, un ou des ordinateurs portables, un ou des dispositifs portables connectés au réseau, y compris des dispositifs du type « réalité augmentée » et/ou « réalité virtuelle », et/ou toutes combinaisons et/ou tous équivalents). Dans tous les cas, les dispositifs de communication peuvent comprendre des vêtements et/ou des appareils portables connectés au réseau, et portés par un ou des opérateurs des machines d'uniformité (où chaque opérateur est un humain ou un appareil connu comme un robot et/ou un véhicule autonome). A titre d'exemple, un dispositif de surveillance porté par l'opérateur peut surveiller par vidéo les conditions d'affiche des points colorisés et envoyer les données correspondantes au serveur 104 du réseau de communication 102.

Le ou les dispositifs de communication peuvent comprendre aussi un ou des ordinateurs à distance pouvant transférer des données par le réseau de communication 102. A titre d'exemple, un dispositif portable du système 100 peut transmettre l'information générale du pneumatique identifié (y compris l'information d'uniformité du pneumatique identifié) à un ordinateur à distance du système 100. Sur la base des données transmises, l'ordinateur à distance peut transmettre au dispositif portable le bilan de localisations de points colorisés pour le pneumatique identifié, indiquant un projet d'affiche prévu (par exemple, une localisation d'un point rouge correspondant au faux-rond).

Dans des modes de réalisation du système 100, le ou les dispositifs de communication du réseau de communication peuvent comprendre aussi un ou des dispositifs de captation qui capturent et transmettent des données du pneumatique identifié au serveur 104. Dans ces modes de réalisation, le ou les dispositifs de captation comprennent un système d'imagerie 106 pour capturer des images d'un pneumatique identifié P* et pour transmettre les données correspondantes au serveur 104. Le système d'imagerie peut comprendre au moins une caméra qui capture des pneumatiques qui entrent dans son champ de vue pendant une période spécifiée (par exemple, des images d'un pneumatique identifié en cours de mesure de l'uniformité.). Le système d'imagerie 106 (y compris sa caméra) est choisie parmi les appareils disponibles dans le commerce (par exemple, des caméras linéaires, matricielles voire même profilomètre 3D).

Le serveur 104 incorpore un module de traitement d'image qui analyse les images des pneumatiques obtenues par le système d'imagerie 106. Le module de traitement d'image trouve le point central C du pneumatique cible et le rayon de jante R_{J} (voir la figure 1). Comme le point central C est déjà connu, le module de traitement d'image peut déterminer la distance correspondant au rayon du pneumatique R_{P} d'un pneumatique identifié P* (par exemple, le rayon du pneumatique identifié P* peut être déterminé à l'aide du théorème de Pythagore en utilisant des distances verticales et horizontales entre des points dans les nuages des points et des limites de l'image obtenue). Une fois que le rayon de jante R_{J} et le rayon du pneumatique R_{P} sont connus, les paramètres du pneumatique identifié peuvent être déterminés. Le module de traitement d'images peut utiliser ces dimensions R_{J}, R_{P} pour déterminer la taille du pneumatique correspondante (par exemple, comme indice dans une référence de tailles de pneumatiques).

Les données correspondantes des images obtenues sont enregistrées dans la base de données du système 100 (par exemple, pour faciliter la construction d'un modèle de prévision de localisation prévue pour l'affiche d'un point colorisé). Ces données sont mises à jour sur une base continue ou sur une base intermittente. Le système 100 permet donc l'amélioration continue sur l'ensemble des pneumatiques traités par le système, assurant que le système 100 s'améliore de l'information qu'il acquiert de chaque pneumatique (y compris l'information d'uniformité).

Le réseau de communication 102 peut inclure des connexions câblées ou sans fil et peut mettre en œuvre tout protocole de transfert de données connu d'un homme de métier. Les exemples de connexions sans fil peuvent inclure, sans limitation, les radiofréquences (RF), les satellites, les téléphones portables (analogiques ou numériques), Bluetooth^{®}, Wi-Fi, infrarouge, « ZigBee », réseau local (LAN), WLAN (Wireless Local Area Network), réseau étendu (WAN), NFC (Near Field Communication), d'autres configurations et normes de communication sans fil, leurs équivalents, et une combinaison de ces éléments.

Il est entendu que le réseau de communication 102 (y compris le serveur 104) implique l'utilisation d'un ou des processeurs comme entendu par l'homme de métier. Le terme « processeur » (ou, alternativement, le terme "circuit logique programmable") (dans le singulier ou le pluriel) désigne un ou plusieurs dispositifs capables de traiter et d'analyser des données et comprenant un ou plusieurs logiciels pour leur traitement (par exemple, un ou plusieurs circuits intégrés connus par l'homme de métier comme étant inclus dans un ordinateur, un ou plusieurs contrôleurs, un ou plusieurs microcontrôleurs, un ou plusieurs micro-ordinateurs, un ou plusieurs automates programmables (ou « PLC »), un ou plusieurs circuits intégrés spécifiques à une application, un ou plusieurs réseaux de neurones, et/ou un ou plusieurs autres circuits programmables équivalents connus). Le processeur comprend un logiciel pour le traitement des données capturées par les éléments associés avec le système 100 (et les données correspondantes obtenues) ainsi qu'un logiciel pour l'identification et la localisation des variances et l'identification de leurs sources pour les corriger.

En se référant encore aux figures 3 et 4, des modes de réalisation sont divulgués d'un procédé de l'invention (« procédé ») mis en œuvre par le système 100 pour enregistrer les coordonnées d'une indication visuelle de l'uniformité d'un pneumatique identifié P* équipé de puce RFID. Tel qu'utilisé ici, le terme "procédé" ou "processus" peut comprendre une ou plusieurs étapes effectuées par au moins un système informatique comportant un ou des processeurs pour exécuter des instructions qui effectuent les étapes. Toute séquence d'étapes est donnée à titre d'exemple et ne limite pas les procédés décrits à une quelconque séquence particulière.

En démarrant le procédé de l'invention, le procédé comprend une étape de détection du pneumatique identifié P* équipé d'une puce RFID. Pendant cette étape, le système d'imagerie 106 obtient une ou des images numériques du pneumatique identifié P* dans le champ de vue de la caméra du système d'imagerie. Pendant cette étape, les placements d'une plaquette 200 et d'un code à barres 300 sont capturés. La plaquette 200, qui est affichée au pneumatique identifié P* par son producteur, incorpore le numéro de semaine et d'année de fabrication (SAF) du pneumatique identifié, ces informations faisant partie de son information générale. Le code à barres 300, qui est aussi affiché au pneumatique identifié P* par son producteur, inclut toutes les informations relatives à la fabrication du pneumatique identifié qui permettent d'identifier sa source exacte (y compris, sans limitation, l'usine de fabrication, les matériaux incorporés et la ou les machines employées pour fabriquer le pneumatique).

Pendant cette étape, l'image du pneumatique cible P* est analysée pour identifier les localisations de la plaquette 200 et du code à barres 300. Pendant cette étape, le système d'imagerie 106 peut balayer pour déterminer les données correspondantes aux bords verticaux avants B_{AV} de sorte qu'une ligne médiane M du pneumatique identifié P* peut être identifiée. Pendant cette étape, le diamètre du pneumatique identifié P* peut être déterminé (par exemple, en déterminant une distance entre le bord vertical avant B_{AV} et le bord vertical arrière B_{AR} imagés). Pendant cette étape, le rayon du pneumatique R_{P} du pneumatique identifié P*peut être déterminé comme moitié du diamètre du pneumatique identifié. Pendant cette étape, le rayon de jante R_{J} du pneumatique identifié P* peut être déterminé comme la moitié du diamètre de la limite interne FI du flanc du pneumatique cible. Pendant cette étape, le point central C peut être identifié comme étant une distance du rayon de jante R_{J} par rapport au bord vertical avant B_{AV} ou au bord vertical arrière B_{AR} et se trouvant le long de la ligne médiane M.

La connaissance des rayons du pneumatique R_{P} et de jante R_{J} du pneumatique identifié P* permettrait au module de traitement d'images de déterminer l'emplacement des limites interne F_{I} et externe F_{E} du flanc F du pneumatique identifié. Cette connaissance du pneumatique identifié P* permettrait au processeur de déterminer la taille du pneumatique cible et donc les localisations de la plaquette 200 et du code à barres 300.

Le procédé de l'invention comprend en outre une étape de calcul d'un angle α₁ qui représente une distance angulaire entre la plaquette 200 et le code à barres 300. Les coordonnées respectives de la plaquette 200 et du code à barres 300 sont utilisées pour calculer l'angle α₁ entre eux. Pendant cette étape, la mesure de l'angle α₁ est enregistrée dans la base de données du système 100.

Le procédé de l'invention comprend en outre une étape de détection d'un point colorisé 400 qui est affiché au pneumatique identifié P* par son producteur. Il est entendu que le pneumatique identifié P* a été déjà sujet aux tests de l'uniformité par le producteur. Pendant cette étape, le point colorisé 400 est détecté dans une ou des images du pneumatique identifié P* dont le placement du point colorisé est capturé.

Le procédé de l'invention comprend en outre une étape de calcul d'un angle α₂ qui représente une distance angulaire entre le code à barres 300 et le point colorisé 400. Les coordonnées respectives du code à barres 300 et du point colorisé 400 sont utilisées pour calculer l'angle α₂ entre eux. Pendant cette étape, la mesure de l'angle α₂ est enregistrée dans la base de données du système 100.

L'enregistrement de l'angle α₁ et de l'angle α₂ permet d'obtenir leur somme pour déterminer un angle total α_{T} entre la plaquette 200 et le point colorisé 400. Cet angle total est aussi enregistré dans la base de données du système 100 de sorte qu'une détermination du placement de la plaquette 200 permet la localisation des coordonnées du point colorisé 400. L'angle total α_{T} qui permet de trouver le point d'uniformité représenté par le point colorisé physique fait part de l'information générale du pneumatique identifié P*. Ainsi, cette information générale peut être incorporée dans la base de données, associée à l'identifiant contenu dans la puce RFID pour permettre l'accès aux coordonnées du point colorisé 400 sans besoin d'avoir un indice visuel physique correspondant.

Le procédé de l'invention comprend en outre une étape de comparaison des angles α₁, α₂ calculés pour le pneumatique identifié P* avec les paramètres de pneumatiques connus (par exemple, les paramètres connus enregistrés dans une référence de pneumatiques fabriqués par le producteur et/ou par d'autres producteurs de pneumatiques connus disponibles dans le commerce). Cette étape est réalisée par le processeur du système 100, ce processeur pouvant récupérer les paramètres de pneumatiques connus correspondant aux pneumatiques disponibles dans le commerce qui correspondent le plus étroitement aux paramètres de pneumatique identifié P*. La référence de pneumatiques peut inclure des mesures correspondant à une pluralité de pneumatiques disponibles dans le commerce.

Pendant l'étape de comparaison, le point central C du pneumatique identifié P* est déjà connu (voir la figure 1). Ainsi, la distance angulaire entre la plaquette 200 et le point colorisé 400 peut être déterminée.

Dans un mode de réalisation du procédé de l'invention, le procédé est mis en œuvre par ordinateur (par exemple, par le serveur 104) pour que le système 100 puisse construire un modèle de prévision de l'information d'uniformité correspondante à un pneumatique identifié (par exemple, un pneumatique identifié prévu pour montage sur un véhicule associé).

Il est envisageable qu'une ou quelques étapes du procédé puissent être réalisées de manière itérative.

Le système 100 de l'invention peut inclure des préprogrammations des informations concernant les événements attendus. Par exemple, un réglage de procédé de l'invention peut être associé avec les paramètres des environnements physiques typiques (par exemple, les machines de test de l'uniformité) dans lesquels le système 100 fonctionne.

Dans des modes de réalisation de l'invention, le système 100 (ou une installation incorporant le système 100) peut recevoir des commandes audios (y compris des commandes vocales) ou d'autres données audio représentant (pour exemple, une marche ou un arrêt d'une ou des étapes du procédé de l'invention). La demande peut inclure une demande pour le calcul actuel de l'angle total α_{T} entre la plaquette 200 et le point colorisé 400. Une réponse générée peut être représentée de manière audible, visuelle, tactile (par exemple, en utilisant une interface haptique) et/ou virtuelle et/ou augmentée. Cette réponse, ensemble avec les données correspondantes, peuvent être enregistrées dans un réseau neuronal.

Il est entendu que le système 100 peut inclure plusieurs dispositifs informatiques qui réalisent divers aspects de l'apprentissage. Dans ces modes de réalisation, le processeur peut configurer le système 100 sur un ou plusieurs paramètres de l'uniformité connus. Dans ces modes de réalisation, il est entendu qu'un ou des moyens de l'apprentissage par renforcement (ou « reinforcement learning ») pourraient être employés.

Les termes « au moins un(e) » et « un(e) ou plusieurs » sont utilisés de manière interchangeable. Les gammes qui sont présentées comme se situant « entre a et b » englobent les valeurs « a » et « b ».

Bien que des modes de réalisation particuliers de l'appareil révélé aient été illustrés et décrits, on comprendra que divers changements, additions et modifications peuvent être pratiqués sans s'écarter de la portée de l'invention comme définie par les revendications annexées.

## Revendications

1. Procédé mis en œuvre par un système (100) pour enregistrer les coordonnées d'une indication visuelle de l'uniformité d'un pneumatique identifié (P*) équipé de puce RFID, le système (100) comprenant un réseau de communication (102) incorporant au moins un serveur de communication (104) avec au moins un processeur, le procédé comprenant les étapes suivantes :
- une étape de détection du pneumatique identifié (P*), pendant laquelle un système d'imagerie (106) du système (100) obtient une ou des images numériques du pneumatique identifié (P*), cette étape comprenant l'étape suivante :
- la capture du placement d'un code à barres (300) dans la ou les images du pneumatique identifié (P*) obtenues par le système d'imagerie (106) ;
- une étape de détection de l'indication visuelle affichée au pneumatique identifié (P*) par son producteur, pendant laquelle l'indication visuelle est détectée dans une ou des images du pneumatique identifié (P*) obtenues par le système d'imagerie (106) dont le placement de l'indication visuelle est capturée ;
- une étape de calcul d'un angle α₂ qui représente une distance angulaire entre le code à barres (300) et l'indication visuelle, de sorte que les coordonnées respectives du code à barres (300) et de l'indication visuelle sont utilisées pour calculer l'angle α₂ entre eux, pendant laquelle la mesure de l'angle α₂ est enregistrée dans la base de données du système (100) ;
**caractérisé en ce que** :
l'étape de détection du pneumatique identifié (P*) comprend les étapes suivantes :
- la capture du placement d'une plaquette (200) dans la ou les images du pneumatique identifié (P*) obtenues par le système d'imagerie (106) ;
- l'analyse de la ou des images du pneumatique identifié (P*) obtenues par le système d'imagerie (106) pour déterminer la taille du pneumatique identifié permettant d'identifier les localisations de la plaquette (200) et du code à barres (300) ;
le procédé comprend :
- une étape de calcul d'un angle α₁ qui représente une distance angulaire entre la plaquette (200) et le code à barres (300), de sorte que les coordonnées respectives de la plaquette (200) et du code à barres (300) sont utilisées pour calculer l'angle α₁ entre eux, pendant laquelle la mesure de l'angle α₁ est enregistrée dans une base de données du système (100) ;
- une étape d'enregistrement de l'angle α₁ et de l'angle α₂ permettant d'obtenir leur somme pour déterminer un angle total α_{T} entre la plaquette (200) et l'indication visuelle, pendant laquelle l'angle total α_{T} est enregistré dans la base de données du système (100) comme l'information générale du pneumatique identifié (P*);
de sorte qu'une détermination du placement de la plaquette (200) permet la localisation des coordonnées du point d'uniformité représentées par l'indication visuelle ; et
de sorte que l'information générale est incorporée dans la base de données, associée à l'identifiant de la puce RFID pour permettre l'accès aux coordonnées de l'information visuelle.

2. Procédé de la revendication 1, comprenant en outre une étape de comparaison des angles α₁, α₂ calculés pour le pneumatique identifié P* avec les paramètres de pneumatiques connus, cette étape étant réalisée par le processeur du système (100).

3. Procédé de la revendication 1 ou de la revendication 2, dans lequel, pendant l'étape de détection du pneumatique identifié (P*), le système d'imagerie (106) balaye pour déterminer les données correspondantes aux bords verticaux avants (B_{AV}) du pneumatique identifié de sorte qu'une ligne médiane (M) du pneumatique identifié peut être identifiée.

4. Procédé de la revendication 3, dans lequel l'étape de détection du pneumatique identifié (P*) comprend en outre au moins une des étapes suivantes :
- une étape de détermination du diamètre du pneumatique identifié (P*);
- une étape de détermination du rayon du pneumatique (R_{P}) du pneumatique identifié (P*);
- une étape de détermination du rayon de jante (R_{J}) du pneumatique identifié (P*) ;
- une étape d'identification du point central (C) du pneumatique identifié (P*) ; et
- une étape de détermination de l'emplacement des limites interne (F_{I}) et externe (F_{E}) du flanc (F) du pneumatique identifié.

5. Procédé de l'une quelconque des revendications 1 à 4, comprenant en outre une étape de comparaison des angles α₁, α₂ calculés pour le pneumatique identifié (P*) avec les paramètres de pneumatiques disponibles dans le commerce qui correspondent le plus étroitement aux paramètres de pneumatique identifié, cette étape étant réalisée par le processeur du système (100).

6. Procédé de l'une quelconque des revendications 1 à 5, dans lequel :
- la plaquette (200) incorpore le numéro de semaine et d'année de fabrication (SAF) du pneumatique identifié (P*); et
- le code à barres (300) inclut toutes les informations relatives à la fabrication du pneumatique identifié (P*) qui permettent d'identifier sa source exacte ;
de sorte que ces informations font partie de l'information générale du pneumatique identifié.

7. Procédé de l'une quelconque des revendications 1 à 6, dans lequel le procédé est mis en œuvre par le serveur (104) pour que le système (100) puisse construire un modèle de prévision de l'information d'uniformité correspondante au pneumatique identifié (P*).

8. Système (100) pour mettre en œuvre le procédé de l'une quelconque des revendications 1 à 7, **caractérisé en ce que** le système (100) comprend :
- un réseau de communication (102) qui gère les données entrantes au système (100) des sources variées, le réseau de communication comprenant :
- au moins un serveur de communication (104) avec au moins un processeur qui gère les données correspondant à l'information générale concernant un pneumatique identifié (P*); et
- un ou des dispositifs de communication qui capturent et transmettent les données obtenues au serveur (104), les dispositifs de communication comprenant un système d'imagerie (106) qui capture des images d'un pneumatique identifié (P*) pour transmettre les données correspondantes aux images obtenues au serveur (104) ;
- et une ou des bases de données dont des données incorporant l'information générale sont enregistrées pour construire un ou des profils de l'uniformité de pneumatiques ;
dans lequel le serveur (104) comprend un module de traitement d'image qui analyse des images des pneumatiques obtenues par le système d'imagerie (106) de sorte que l'information générale du pneumatique identifié comprenant des données correspondant au pneumatique identifié sont incorporées dans son identifiant RFID.

9. Système (100) de la revendication 8, dans lequel le serveur (104) est associé à un ou plusieurs producteurs de pneumatiques.

## Patentansprüche

1. Verfahren, das von einem System (100) durchgeführt wird, um die Koordinaten einer visuellen Anzeige der Gleichförmigkeit eines identifizierten Reifens (P*), der mit einem RFID-Chip ausgestattet ist, zu speichern, wobei das System (100) ein Kommunikationsnetzwerk (102) umfasst, das mindestens einen Kommunikationsserver (104) mit mindestens einem Prozessor beinhaltet, wobei das Verfahren die folgenden Schritte umfasst:
- einen Schritt des Detektierens des identifizierten Reifens (P*), während dessen ein Bildgebungssystem (106) des Systems (100) ein oder mehrere digitale Bilder des identifizierten Reifens (P*) erhält, wobei dieser Schritt den folgenden Schritt umfasst:
- das Erfassen der Platzierung eines Barcodes (300) in dem oder den Bildern des identifizierten Reifens (P*), die von dem Bildgebungssystem (106) erhalten werden;
- einen Schritt des Detektierens der visuellen Anzeige, die an dem identifizierten Reifen (P*) von seinem Hersteller angebracht wird, während dessen die visuelle Anzeige in einem oder mehreren von dem Bildgebungssystem (106) erhaltenen Bildern des identifizierten Reifens (P*) detektiert wird, dessen Platzierung der visuellen Anzeige erfasst wird;
- einen Schritt des Berechnens eines Winkels α₂, der einen Winkelabstand zwischen dem Barcode (300) und der visuellen Anzeige repräsentiert, so dass die jeweiligen Koordinaten des Barcodes (300) und der visuellen Anzeige verwendet werden, um den Winkel α₂ zwischen ihnen zu berechnen, während dessen das Maß des Winkels α₂ in der Datenbank des Systems (100) gespeichert wird;
**dadurch gekennzeichnet**,
der Schritt des Detektierens des identifizierten Reifens (P*) umfasst den folgenden Schritt:
- das Erfassen der Platzierung eines Plättchens (200) in dem oder den Bildern des identifizierten Reifens (P*), die von dem Bildgebungssystem (106) erhalten werden;
- das Analysieren des oder der Bilder des identifizierten Reifens (P*), die von dem Bildgebungssystem (106) erhalten werden, um die Größe des identifizierten Reifens zu bestimmen, was es ermöglicht, die Positionen des Plättchens (200) und des Barcodes (300) zu identifizieren;
das Verfahren die folgenden Schritte umfasst:
- einen Schritt des Berechnens eines Winkels α₁, der einen Winkelabstand zwischen dem Plättchen (200) und dem Barcode (300) repräsentiert, so dass die jeweiligen Koordinaten des Plättchens (200) und des Barcodes (300) verwendet werden, um den Winkel α₁ zwischen ihnen zu berechnen, während dessen das Maß des Winkels α₁ in einer Datenbank des Systems (100) gespeichert wird;
- einen Schritt des Speicherns des Winkels α₁ und des Winkels α₂, was es ermöglicht, ihre Summe zu erhalten, um einen Gesamtwinkel α_{T} zwischen dem Plättchen (200) und der visuellen Anzeige zu bestimmen, während dessen der Gesamtwinkel α_{T} in der Datenbank des Systems (100) als allgemeine Information des identifizierten Reifens (P*) gespeichert wird;
so dass eine Bestimmung der Platzierung des Plättchens (200) die Lokalisierung der Koordinaten des Gleichförmigkeitspunktes, die durch die visuelle Anzeige repräsentiert werden, ermöglicht; und
so, dass die allgemeine Information in die Datenbank aufgenommen wird, verknüpft mit der Kennung des RFID-Chips, um den Zugriff auf die Koordinaten der visuellen Information zu ermöglichen.

2. Verfahren nach Anspruch 1, umfassend ferner einen Schritt des Vergleichens der für den identifizierten Reifen P* berechneten Winkel α₁, α₂ mit den Parametern von bekannten Reifen, wobei dieser Schritt von dem Prozessor des Systems (100) ausgeführt wird.

3. Verfahren nach Anspruch 1 oder Anspruch 2, wobei während des Schritts des Detektierens des identifizierten Reifens (P*) das Bildgebungssystem (106) abtastet, um die den vorderen vertikalen Rändern (B_{AV}) des identifizierten Reifens entsprechenden Daten zu bestimmen, so dass eine Mittellinie (M) des identifizierten Reifens identifiziert werden kann.

4. Verfahren nach Anspruch 3, wobei der Schritt des Detektierens des identifizierten Reifens (P*) ferner mindestens einen der folgenden Schritte umfasst:
- einen Schritt des Bestimmens des Durchmessers des identifizierten Reifens (P*);
- einen Schritt des Bestimmens des Radius (R_{P}) des identifizierten Reifens (P*);
- einen Schritt des Bestimmens des Felgenradius (R_{J}) des identifizierten Reifens (P*);
- einen Schritt des Identifizierens des Mittelpunkts (C) des identifizierten Reifens (P*); und
- einen Schritt des Bestimmens der Lage der inneren (F_{I}) und äußeren (F_{E}) Grenzen der Seitenwand (F) des identifizierten Reifens.

5. Verfahren nach einem der Ansprüche 1 bis 4, umfassend ferner einen Schritt des Vergleichens der für den identifizierten Reifen (P*) berechneten Winkel α₁, α₂ mit den Parametern von im Handel verfügbaren Reifen, die den Parametern des identifizierten Reifens am ehesten entsprechen, wobei dieser Schritt von dem Prozessor des Systems (100) ausgeführt wird.

6. Verfahren nach einem der Ansprüche 1 bis 5, wobei:
- das Plättchen (200) die Nummer der Woche und des Jahrs der Herstellung (SAF) des identifizierten Reifens (P*) beinhaltet; und
- der Barcode (300) alle Informationen bezüglich der Herstellung des identifizierten Reifens (P*) enthält, die es ermöglichen, seine genaue Quelle zu identifizieren; so dass diese Informationen Teil der allgemeinen Information des identifizierten Reifens sind.

7. Verfahren nach einem der Ansprüche 1 bis 6, wobei das Verfahren von dem Server (104) durchgeführt wird, damit das System (100) ein Modell zur Vorhersage der dem identifizierten Reifen (P*) entsprechenden Gleichförmigkeitsinformation erstellen kann.

8. System (100) zur Durchführung des Verfahrens nach einem der Ansprüche 1 bis 7, das System (100) umfassend:
- ein Kommunikationsnetzwerk (102), das die in das System (100) aus verschiedenen Quellen eingehenden Daten verwaltet, wobei das Kommunikationsnetzwerk umfasst:
- mindestens einen Kommunikationsserver (104) mit mindestens einem Prozessor, der die Daten verwaltet, die der allgemeinen Information bezüglich eines identifizierten Reifens (P*) entsprechen; und
- eine oder mehrere Kommunikationsvorrichtungen, die die erhaltenen Daten erfassen und an den Server (104) übermitteln, wobei die Kommunikationsvorrichtungen ein Bildgebungssystem (106) umfassen, das Bilder eines identifizierten Reifens (P*) erfasst, um die den erhaltenen Bildern entsprechenden Daten an den Server (104) zu übermitteln;
- und eine oder mehrere Datenbanken, deren Daten, welche die allgemeine Information beinhalten, gespeichert werden, um ein oder mehrerer Profile der Gleichförmigkeit von Reifen zu erstellen;
wobei der Server (104) ein Bildverarbeitungsmodul umfasst, das von dem Bildgebungssystem (106) erhaltene Bilder der Reifen analysiert, so dass die allgemeine Information des identifizierten Reifens, die dem identifizierten Reifen entsprechende Daten umfasst, in seine RFID-Kennung aufgenommen wird.

9. System (100) nach Anspruch 8, wobei der Server (104) einem oder mehreren Reifenherstellern zugeordnet ist.

## Claims

1. Method implemented by a system (100) for recording the coordinates of a visual indication of the uniformity of an identified tyre (P*) equipped with a RFID chip, the system (100) comprising a communication network (102) incorporating at least one communication server (104) with at least one processor, the method comprising the following steps:
- a step of detecting the identified tyre (P*), during which an imaging system (106) of the system (100) obtains one or more digital images of the identified tyre (P*), this step comprising the following step:
- capturing the position of a barcode (300) in the one or more images of the identified tyre (P*) that were obtained by the imaging system (106);
- a step of detecting the visual indication displayed on the identified tyre (P*) by its manufacturer, during which the visual indication is detected in one or more images of the identified tyre (P*) that were obtained by the imaging system (106) and in which the position of the visual indication has been captured;
- a step of calculating an angle α₂ which represents an angular distance between the barcode (300) and the visual indication, such that the respective coordinates of the barcode (300) and of the visual indication are used to calculate the angle α₂ between them, during which the measurement of the angle α₂ is recorded in the database of the system (100);
**Characterized in that**:
the step of detecting the identified tyre (P*) comprises the following step:
- capturing the position of a tag (200) in the one or more images of the identified tyre (P*) that were obtained by the imaging system (106);
- analysing the one or more images of the identified tyre (P*) that were obtained by the imaging system (106) to determine the size of the identified tyre, making it possible to identify the locations of the tag (200) and of the barcode (300);
the method comprises the following steps:
- a step of calculating an angle α₁ which represents an angular distance between the tag (200) and the barcode (300), such that the respective coordinates of the tag (200) and of the barcode (300) are used to calculate the angle α₁ between them, during which the measurement of the angle α₁ is recorded in a database of the system (100);
- a step of recording the angle α₁ and the angle α₂, making it possible to add them together to determine a total angle α_{T} between the tag (200) and the visual indication, during which the total angle α_{T} is recorded in the database of the system (100) as the overall information of the identified tyre (P*);
such that a determination of the position of the tag (200) makes it possible to locate the coordinates of the uniformity dot that are represented by the visual indication; and such that the overall information is incorporated in the database, associated with the identifier of the RFID chip to enable access to the coordinates of the visual indication.

2. Method according to Claim 1, additionally comprising a step of comparing the angles α₁, α₂ calculated for the identified tyre P* with known tyre parameters, this step being carried out by the processor of the system (100).

3. Method according to Claim 1 or Claim 2, wherein, during the step of detecting the identified tyre (P*), the imaging system (106) performs a scan to determine the data corresponding to the front vertical edges (B_{AV}) of the identified tyre such that a midline (M) of the identified tyre can be identified.

4. Method according to Claim 3, wherein the step of detecting the identified tyre (P*) additionally comprises at least one of the following steps:
- a step of determining the diameter of the identified tyre (P*);
- a step of determining the tyre radius (R_{P}) of the identified tyre (P*);
- a step of determining the rim radius (R_{J}) of the identified tyre (P*);
- a step of identifying the central point (C) of the identified tyre (P*); and
- a step of determining the location of the internal limit (F_{I}) and external limit (F_{E}) of the sidewall (F) of the identified tyre.

5. Method according to any one of Claims 1 to 4, additionally comprising a step of comparing the angles α₁, α₂ calculated for the identified tyre (P*) with the parameters of commercially available tyres which most closely match the parameters of the identified tyre, this step being carried out by the processor of the system (100).

6. Method according to any one of Claims 1 to 5, wherein:
- the tag (200) incorporates the calendar week and year of manufacture (part of the DOT date code) of the identified tyre (P*); and
- the barcode (300) includes all the information relating to the manufacture of the identified tyre (P*) which makes it possible to identify its exact source;
such that this information forms part of the overall information of the identified tyre.

7. Method according to any one of Claims 1 to 6, wherein the method is implemented by the server (104) such that the system (100) can construct a model for forecasting the uniformity information corresponding to the identified tyre (P*).

8. System (100) for implementing the method according to any one of Claims 1 to 7, **characterized in that** the system (100) comprises:
- a communication network (102) which manages the data entering the system (100) from various sources, the communication network comprising:
- at least one communication server (104) with at least one processor which manages the data corresponding to the overall information relating to an identified tyre (P*); and
- one or more communication devices which capture and transmit the data obtained to the server (104), the communication devices comprising an imaging system (106) which captures images of an identified tyre (P*) to transmit the data corresponding to the images obtained to the server (104);
- and one or more databases in which data incorporating the overall information are recorded for constructing one or more tyre uniformity profiles;
wherein the server (104) comprises an image processing module which analyses images of the tyres obtained by the imaging system (106) such that the overall information of the identified tyre comprising data corresponding to the identified tyre are incorporated in its RFID identifier.

9. System (100) according to Claim 8, wherein the server (104) is associated with one or more tyre manufacturer
